# EUROPÄISCHE PATENTSCHRIFT

(11) **EP 1 249 566 B1**
(45) Veröffentlichungstag und Bekanntmachung des Hinweises auf die Patenterteilung: **23.05.2007**
(21) Anmeldenummer: 02006358.2
(22) Anmeldetag: 21.03.2002
(51) Int. Cl.: E05B 67/00, E05B 71/00

(54) **Verfahren zur Herstellung einer Verbindung**
Method for creating a connection
Porcédé de mise en oeuvre d'un raccordement

(30) Priorität: 10.04.2001 DE 10117925
(43) Veröffentlichungstag der Anmeldung: 16.10.2002
(73) Patentinhaber: ABUS August Bremicker Söhne KG, 58300 Wetter-Vollmarstein (DE)
(72) Erfinder:
(74) Vertreter: Manitz, Finsterwald & Partner GbR

(56) Entgegenhaltungen:
- EP-A- 0 098 986
- EP-A- 0 738 840
- US-A- 1 845 354
- US-A- 3 561 102
- US-A- 3 848 389
- US-A- 4 057 982
- US-A- 5 732 577
- US-A- 6 108 894
- "Wegweiser für eine sichere Dichtverbindung an Flanschen" EUROPEAN SEALING ASSOCIATION E.V; FLUID SEALING ASSOCIATION, Bd. ESA/FSA, Nr. 009/98, Mai 2000 (2000-05), Seite 14-17,

## Beschreibung

Die Erfindung betrifft ein Verfahren zur Herstellung einer Verbindung zwischen zumindest zwei aus gehärtetem Material bestehenden Bereichen eines Schlosses, wobei jeder der zu verbindenden Bereiche jeweils eine Öffnung aufweist, in denen ein Verbindungsstift zur Kopplung der beiden Bereiche fixiert wird.

Radschlösser mit einer Mehrzahl von drehbar miteinander verbundenen Elementen sind in US 5,732,577 offenbart. Hier wird auch ein Verfahren zur Herstellung einer Verbindung nach dem Oberbgriff des Anspruchs 1 offenbart.

Wenn zwei bereits gehärtete, insbesondere aus gehärtetem Stahl bestehende Bereiche eines Schlosses mittels eines Verbindungsstifts miteinander verbunden werden sollen, besteht oftmals das Problem, daß nach dem Herstellen der Verbindung letztlich auch der Verbindungsstift gehärtet sein soll, was dementsprechend einen zweiten Härtungsprozeß erforderlich machen würde. Dies ist fertigungstechnisch jedoch nicht möglich.

Dementsprechend müssen die zu verbindenden Bereiche und der Verbindungsstift zuerst zusammengeführt und anschließend gemeinsam gehärtet werden. Da beim Härtungsprozeß jedoch in der Regel thermische Verformungen auftreten, besteht die Gefahr, daß die zu erzeugende kraftschlüssige Verbindung zwischen den genannten Bereichen und dem Verbindungsstift hierdurch beeinträchtigt wird.

Die Aufgabe der Erfindung besteht darin, ein Verfahren zur Herstellung einer Verbindungsvorrichtung zu schaffen, dass einerseits ein wirtschaftliches Herstellen der Verbindung ermöglicht und andererseits sicherstellt, daß der Kraft- und Formschluß zwischen den zu verbindenden Bereichen und dem Verbindungsstift nicht beeinträchtigt wird.

Diese Aufgabe wird durch ein Verfahren mit den Merkmalen des Anspruchs 1 gelöst.

Durch die Verwendung eines Stahls mit den genannten Eigenschaften für den Verbindungsstift wird es möglich, mit dem erfindungsgemäßen gefügeverdichtenden Kaltverformungs-Nietvorgang zum einen eine Verformung des Verbindungsstifts zu erreichen, welche diesen in den Öffnungen der zu verbindenden Bereiche fixiert und zum anderen im Verbindungsstift eine Kaltverfestigung zu erzeugen, die letztlich einen aus dem Stand der Technik bekannten, unter Hitzeeinwirkung erfolgenden Härtungsprozeß ersetzt. Es wird also mit ein und demselben Vorgang, nämlich dem Verformen des Verbindungsstifts, sowohl die kraft- und formschlüssige Verbindung mit den genannten Bereichen als auch die "Härtung" des Verbindungsstifts erreicht, was natürlich zum einen sehr wirtschaftlich ist und zum anderen sicherstellt, daß die hergestellte kraft- und formschlüssige Verbindung zwischen den genannten Bereichen und dem Verbindungsstift durch einen nachfolgenden Härtungsprozeß nicht mehr beeinträchtigt werden kann.

Besonders bevorzugt ist es, wenn ein Verbindungsstift mit einer Zugfestigkeit von mehr als 800 N/mm² verwendet wird, da sich dann eine besonders gute "Härtung" erzielen läßt. Der Verbindungsstift kann beispielsweise aus verschleißfestem Stahl, insbesondere aus Hartmanganstahl bestehen, z.B. X120Mn12 gemäß DIN.

Während des Herstellens der Verbindung, also während des Kaltverformungs-Nietvorgangs, kann - je nach Bedarf - zwischen den beiden zu verbindenden Bereichen ein Abstandshalter angeordnet werden. Alternativ können die beiden zu verbindenden Bereiche auch direkt aneinander anliegen.

Die beiden mittels des Verbindungsstifts zu verbindenden Bereiche können entweder Bestandteil eines einzigen Bauteils oder Bestandteil zweier unterschiedlicher Bauteile sein.

Bei einem Schloß, welches mit einer nach dem erfindungsgemäßen Verfahren hergestellten Verbindungsvorrichtung ausgestattet ist, kann beispielsweise ein in einem Schloßkörper unlösbar zu fixierendes Schloßteil mittels der erfindungsgemäß hergestellten Verbindungsvorrichtung mit dem Schloßkörper verbunden sein. Es ist beispielsweise aber auch möglich, zumindest zwei Schloß-Gelenkstäbe mittels der erfindungsgemäß hergestellten Verbindungsvorrichtung miteinander zu verbinden. Im erstgenannten Fall werden die beiden miteinander verbundenen Bereiche in der Regel Bestandteil eines einzigen Bauteils sein, während im zweitgenannten Fall zwei unterschiedliche Bauteile, nämlich zwei Schloß-Gelenkstäbe erfindungsgemäß miteinander verbunden werden.

Weiterhin kann das erfindungsgemäße Verfahren bei einem Ketten-, Kabel- oder Gelenkschloß mit einem Schloßkörper und einem langgestreckten Absperrelement in Form einer Kette, eines Kabels oder eines Gelenkstabs angewendet werden, welches bzw. welcher mit seinem ersten Ende fest mit dem Schloßkörper verbunden und mit seinem zweiten Ende im Schloßkörper mittels eines Schließmechanismus verriegelbar ist. Dabei bildet das erste Ende des langgestreckten Absperrelements eine Schlaufe, die einen Verbindungsstift umgibt, der Bestandteil einer erfindungsgemäß hergestellten Verbindungsvorrichtung ist, wobei die beiden mittels des Verbindungsstifts verbundenen Bereiche jeweils Bereiche des Schloßkörpers darstellen. Die genannte Schlaufe kann durch die Endschlinge eines Kabels, durch eine Kettenglied oder durch eine Bohrung in einem Gelenkstab-Element realisiert sein.

Besonders bevorzugt ist es dabei, wenn die beiden mittels des Verbindungsstifts verbundenen Bereiche des Schloßkörpers einstückig miteinander ausgebildet sind und eine im wesentlichen als Vierkantprofil ausgebildete Aufnahme oder eine im wesentlichen U-förmig ausgebildete Aufnahme für den Verbindungsstift bilden. Die zwei gegenüberliegende Seiten des Vierkantprofils bzw. die beiden Schenkel der U-förmigen Aufnahme weisen dabei dann die Öffnungen auf, in denen der Verbindungsstift mittels des erfindungsgemäßen Kaltverformungs-Nietvorgangs fixiert wird. Der erfindungsgemäße Verbindungsvorgang muß in diesem Fall ausgeführt werden, nachdem die am ersten Ende des Absperrelements ausgebildete Schlaufe um den Verbindungsstift gelegt wurde. Die anschließende erfindungsgemäße Verbindung von Verbindungsstift mit Schloßkörper stellt dann sicher, daß ein nachträgliches Lösen der Schlaufe vom Verbindungsstift nicht möglich ist.

Die Erfindung wird nachfolgend durch die Erläuterung von Ausführungsbeispielen unter Bezugnahme auf die Zeichnungen beschrieben; in diesen zeigen:
- Fig. 1a bis 1f: Schnittansichten von vier unterschiedlichen erfindungsgemäß hergestellten Verbindungsvorrichtungen,
- Fig. 2: eine dreidimensionale Explosionszeichnung von Teilen eines Kettenschlosses mit einer erfindungsgemäß hergestellten Verbindungsvorrichtung, und
- Fig. 3: eine Schnittansicht eines montierten Kettenschlosses gemäß Fig. 2.

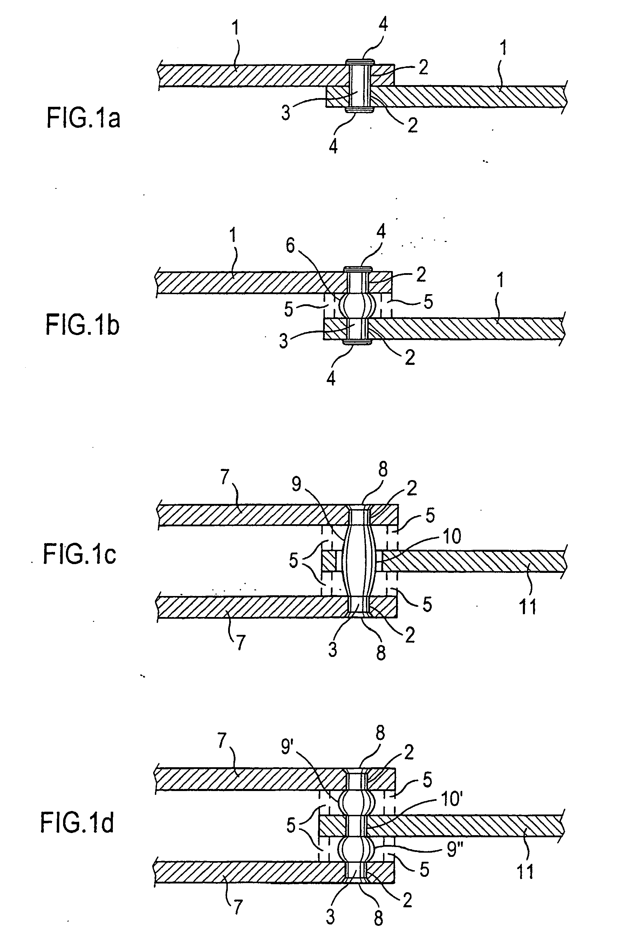

Fig. 1a zeigt eine Schnittdarstellung von zwei stangenförmigen Schloßbestandteilen, die in der Zeichenebene versetzt zueinander angeordnet sind und mit ihren sich senkrecht zu ihren Stirnseiten erstreckenden Endbereichen flächig aneinander anliegen. Die beiden Schloßbestandteile 1 weisen jeweils eine Öffnung 2 auf, wobei die beiden Öffnungen 2 so angeordnet sind, daß sie miteinander fluchten.

Durch die Öffnungen 2 hindurch erstreckt sich ein Verbindungsstift 3, der aus Stahl mit einer Zugfestigkeit von zumindest 700 N/mm² besteht.

Bei der Darstellung gemäß Fig. 1a ist der Verbindungsstift 3 an seinen beiden stirnseitigen Enden bereits mittels eines gefügeverdichtenden Kaltverformungs-Nietvorgangs in der Weise verformt worden, daß sich an seinen beiden stirnseitigen Enden pilzkopfartige Verdickungen 4 ausgebildet haben. Diese Verdickungen 4 sind unmittelbar benachbart zu den Oberflächen der Schloßbestandteile 1 angeordnet, so daß die Schloßbestandteile 1 fest in der dargestellten Position, in der sie flächig aneinander anliegen, gehalten werden. Dies bedeutet, daß der Abstand zwischen den beiden stirnseitigen Verdickungen 4 zumindest im wesentlichen der Summe der sich in Längsrichtung des Verbindungsstifts 3 erstreckenden Abmessungen der Schloßbestandteile 1 entspricht.

Vor dem erwähnten Kaltverformungs-Nietvorgang besitzt der Verbindungsstift 3 eine Länge, die etwas größer als die in Fig. 1a dargestellte Länge ist. Während des Kaltverformungs-Nietvorgangs findet gleichzeitig mit Ausbildung der Verdickungen 4 eine Verkürzung des Verbindungsstifts 3 statt. Wenn der Verbindungsstift 3 beispielsweise eine Länge von ca. 40 mm besitzt, ist es sinnvoll, ihn durch den Kaltverformungs-Nietvorgang um einige mm, beispielsweise zwischen 3 und 10 mm zu verkürzen bzw. zu stauchen, damit der Kaltverformungs-Nietvorgang die gewünschte Verformung und Kaltverfestigung bewirkt. Durch den Werkstoffaufbau und diese Kaltverfestigung wird erreicht, daß der Verbindungsstift 3 stabil gegen Aufbohren, Sägen oder Kneifen ist, ohne daß er einem unter Hitzeeinwirkung stattfindenden Härtungsprozeß ausgesetzt wurde.

Fig. 1b entspricht im wesentlichen Fig. 1a mit dem Unterschied, daß die beiden stangenförmigen Schloßbestandteile 1 nicht flächig aneinander anliegen, sondern beabstandet voneinander angeordnet sind. Um in diesem Fall den erfindungsgemäßen Kaltverformungs-Nietvorgang problemlos ausführen zu können, müssen während dieses Vorgangs beispielsweise zwischen den Schloßbestandteilen 1 gestrichelt dargestellte Abstandshalter 5 vorgesehen werden, die den gewünschten Abstand zwischen den beiden Schloßbestandteilen 1 sicherstellen. Alternativ können auch beliebige andere Vorrichtungen zur Aufrechterhaltung des genannten Abstands eingesetzt werden.

Während des Kaltverformungs-Nietvorgangs werden in diesem Fall nicht nur die Verdickungen 4 an den stirnseitigen Enden des Verbindungsstifts 3, sondern zusätzlich wird auch noch eine weitere Verdickung 6 ausgebildet, welche sich zwischen den beiden Schloßbestandteilen 1 befindet. Die Abstandshalter 5 müssen dabei so angeordnet sein, daß sie während des Kaltverformungs-Nietvorgangs nicht von der sich ausbildenden zusätzlichen Verdickung 6 berührt werden.
Die Verdickung 6 stellt nach Abschluß des Kaltverformungs-Nietvorgangs sicher, daß die beiden Schloßbestandteile 1 auch nach Entfernen der Abstandshalter 5 den gewünschten Abstand zueinander aufweisen.

Bei einer weiteren, nicht dargestellten Ausführungsvariante können die Schloßbestandteile 1 auch gegeneinander um die Achse des Verbindungsstifts 3 verdrehbar sein. In diesem Fall könnte der Verbindungsstift 3 in demjenigen Bereich, in dem er in den Öffnungen 2 zu liegen kommt, in einer Hülse geführt sein, die ihrerseits in den Öffnungen 2 drehbar gelagert ist.

Fig. 1c zeigt zwei stangenförmige Schloßbestandteile 7, die beispielsweise Bestandteil einer U-förmigen Halterung sein können und jeweils einen Schenkel dieser U-förmigen Halterung bilden. Die beiden stangenförmigen Schloßbestandteile 7 sind wiederum mit jeweils einer Öffnung 2 versehen, wobei die Öffnungen 2 beider stangenförmiger Schloßbestandteile 7 miteinander fluchten. Die stangenförmigen Schloßbestandteile 7 erstrecken sich parallel zueinander, sind dabei jedoch voneinander beabstandet angeordnet.

Alternativ können die zwei stangenförmigen Schloßbestandteile 7 auch Bestandteil eines einzigen Vierkantprofils sein. In diesem Fall stellen die Elemente 7 dann jeweils eine Schnitt durch zwei einander gegenüberliegende Längsseiten des Vierkantprofils dar. Die zusätzliche Möglichkeit dieser Alternative besteht für die gesamte nachfolgende Beschreibung der Figuren 1c bis 1f, auch wenn dort der Einfachheit halber immer nur von stangenförmigen Schloßbestandteilen 7 die Rede ist.

Durch die Öffnungen 2 hindurch erstreckt sich ein Verbindungsstift 3, welcher an seinen stirnseitigen Enden senkkopfartige Vertiefungen aufweist, deren Oberfläche mit den Oberflächen der Schloßbestandteile 7 fluchten. Weiterhin weist der Verbindungsstift 3 in dem sich zwischen den Schloßbestandteilen 7 erstreckenden Bereich eine langgestreckte zusätzliche Verdickung 9 auf, die wiederum sicherstellt, daß sich der gewünschte Abstand zwischen den beiden Schloßbestandteilen 7 nicht verändert. Der mittlere Bereich des Verbindungsstifts 3 bzw. der zusätzlichen Verdickung 9 befindet sich innerhalb einer Öffnung 10 eines weiteren Schloßbestandteils 11, welches beispielsweise als Schloß-Gelenkstab ausgebildet sein kann. Der Durchmesser der Öffnung 10 ist dabei so bemessen, daß er größer ist als der Durchmesser der Verdickung 9 in ihrem Bereich maximaler Ausdehnung. Dadurch wird bewirkt, daß das Schloßbestandteil 11 auch nach Abschluß des Kaltverformungs-Nietvorgangs des Verbindungsstifts 3 um den Verbindungsstift 3 drehbar ist.

Beim Herstellen der Verbindung gemäß Fig. 1c werden zuerst die stangenförmigen Schloßbestandteile, die Abstandshalter 5 und das Schloßbestandteil 11 in der dargestellten Weise angeordnet. Anschließend wird dann der Verbindungsstift 3 in seinem unverformten Zustand durch die Öffnungen 2 und 10 hindurchgesteckt. Anschließend findet dann der Kaltverformungs-Nietvorgang statt, welcher die Verdickungen 8 und 9 ausbildet. Anschließend können dann die Abstandshalter 5 wieder entfernt werden.

Fig. 1d entspricht im wesentlichen Fig. 1c mit dem Unterschied, daß die Öffnung 10' des Schloßbestandteils 11 einen Durchmesser aufweist, der dem Durchmesser des Verbindungsstifts 3 vor dem Kaltverformungs-Nietvorgang entspricht. Dies bedingt, daß sich zwischen dem oberen Schloßbestandteil 7 und dem Schloßbestandteil 11 eine Verdickung 9' und zwischen dem Schloßbestandteil 11 und dem unteren Schloßbestandteil 7 eine Verdickung 9" ausbildet. Weiterhin dehnt sich der Verbindungsstift 3 im Bereich der Öffnung 10' so aus, daß er an den Innenwänden der Öffnung 10' anliegt und somit ein Verdrehen des Schloßbestandteils 11 um den Verbindungsstift 3 zumindest erschwert.

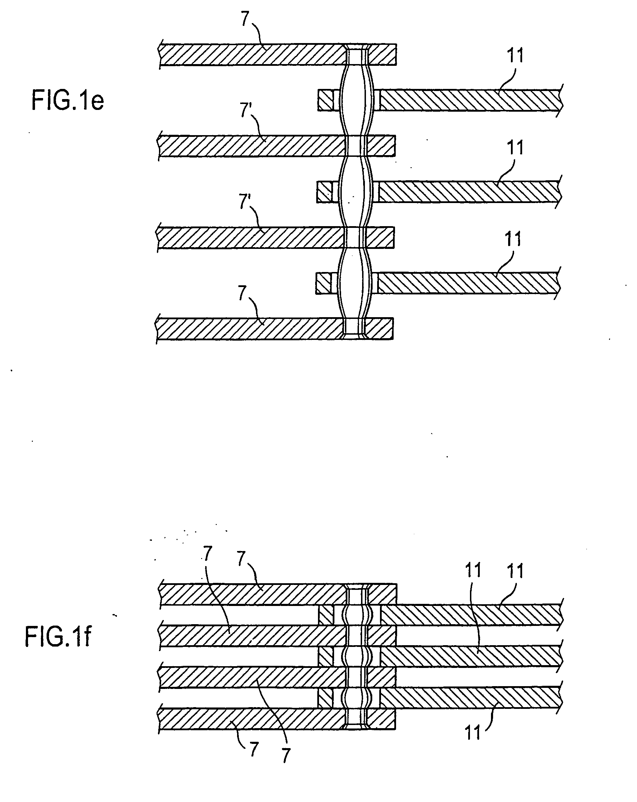

Die Fig. 1e zeigt, daß die Anordnungen gemäß Fig. 1c auch sandwichartig ergänzt werden kann, so daß beispielsweise vier Schloßbestandteile 7, 7' mit drei Schloßbestandteilen 11 kammartig verbunden werden können. Die vorstehenden Ausführungen zu Fig. 1c treffen insoweit auch auf die Fig. 1e zu.

Fig. 1f zeigt einen alternativen sandwichartigen Aufbau, bei dem vier Schloßbestandteile 7, 7' mit drei Schloßbestandteilen 11 ebenfalls kammartig verbunden sind, wobei die Schloßbestandteile 7, 7', 11 jedoch direkt aneinander anliegen.

Besonders vorteilhaft ist es, wenn die Schloßbestandteile 7, 7', 11 gemäß den Fig. 1e und 1f aus unterschiedlichen Materialien bestehen, die nicht als Verbundmaterial hergestellt werden können. Beispielsweise können die jeweils äußersten Schloßbestandteile 7 gehärtet ausgeführt sein, so daß sie ausreichenden Schutz gegen Bohren und Sägen bieten. Die innerhalb der äußersten Schloßbestandteile 7 liegenden Schloßbestandteile 7', 11 können beispielsweise alternierend aus schockabsorbierendem Kunststoff und einem schmierenden Werkstoff gefertigt sein, der abrasive Werkzeuge zusetzt. So läßt sich eine sehr aufbruchsichere Gesamtanordnung schaffen.

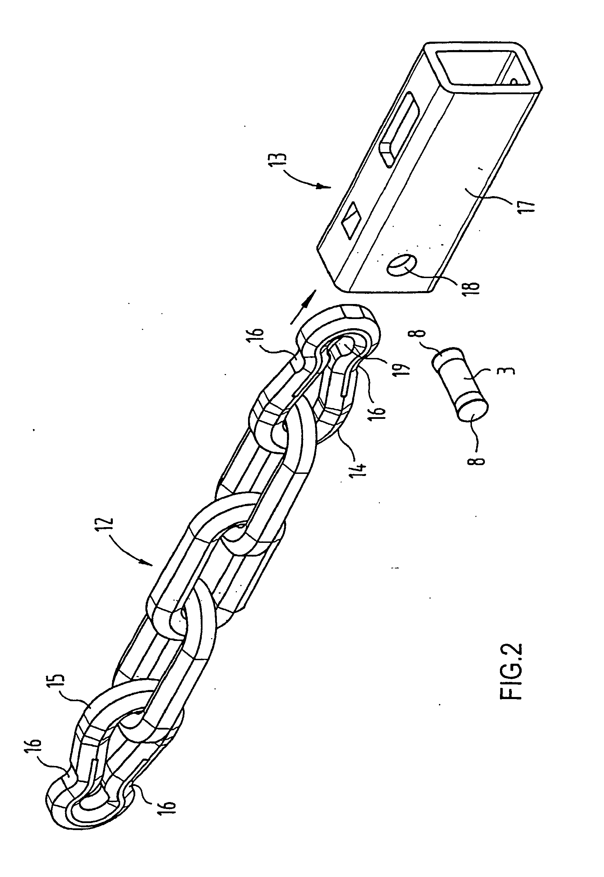

Fig. 2 zeigt eine dreidimensionale Explosionszeichnung von Teilen eines Kettenschlosses, bei dem im zusammengebauten Zustand ein Ende einer Kette 12 in einem Schloßkörper 13 fest fixiert und ein anderes Ende der Kette 12 im Schloßkörper 13 mittels eines nicht dargestellten Schließmechanismus verriegelbar ist.

Die Kette 12 besteht aus einer Anzahl von miteinander verschlungenen, im wesentlichen O-förmigen Kettengliedern, wobei in Fig. 2 aus Gründen der Übersichtlichkeit lediglich fünf Kettenglieder dargestellt sind. In einer einsatzfähigen Version eines Kettenschlosses wird die Kette 12 eine höhere Anzahl von Kettengliedern aufweisen.

Die beiden endseitigen Kettenglieder 14 und 15 weisen jeweils eine zweiseitige Einschnürung 16 auf, welche sich jeweils senkrecht zur Längsrichtung der Kettenglieder 14, 15 erstreckt.

Der Schloßkörper 13 besteht aus einem Gehäuse 17 in Form eines Vierkantprofils aus gehärtetem Stahl.

In einem seitlichen Endbereich des Gehäuses 17 ist eine Öffnung in Form einer kreisrunden Ausnehmung 18 vorgesehen, die sich durch beide Seitenwände des Gehäuses 17 hindurch erstreckt. In Fig. 2 ist lediglich eine Seite des Gehäuses 17 zu sehen und dementsprechend auch nur eine Ausnehmung 18.

Der Durchmesser der Ausnehmung 18 ist so bemessen, daß er dem Durchmesser eines Verbindungsstifts 3 entspricht, welcher in Fig. 2 in einem Zustand nach Durchführung des erfindungsgemäßen Kaltverformungs-Nietvorgangs dargestellt ist. Vor dem Kaltverformungs-Nietvorgang besitzt der Verbindungsstift 3 einen konstanten Durchmesser ohne stirnseitige Verdickungen 8, so daß er problemlos durch die Ausnehmungen 16 hindurch gesteckt werden kann. Erst bei Durchführung des erfindungsgemäßen Kaltverformungs-Nietvorgangs bilden sich die Verdickungen 8 aus, durch die der Verbindungsstift 3 in den Ausnehmungen fixiert wird.

Bevor der Verbindungsstift 3 in die Ausnehmungen 18 gesteckt wird, wird das endseitige Kettenglied 14 in das Gehäuse 17 in Pfeilrichtung so weit hineinbewegt, daß der durch die Einschnürung 16 gebildete, im wesentlichen kreisrunde Durchgangsbereich 19 des Kettengliedes 14 mit den Ausnehmungen 18 fluchtet. Anschließend wird dann der Stift 3 durch die Ausnehmungen 18 und den Durchgangsbereich 19 hindurchgesteckt. Durch den anschließenden Kaltverformungs-Nietvorgang wird somit das Kettenglied 14 unlösbar im Gehäuse 17 fixiert.

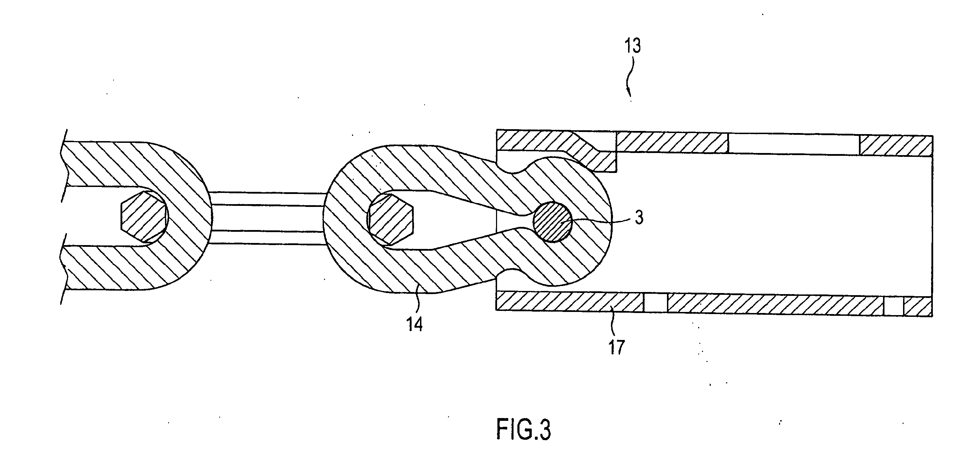

Fig. 3 zeigt eine Schnittdarstellung eines Schloßbereichs gemäß Fig. 2 und insbesondere, daß das Kettenglied 14 mittels des erfindungsgemäß im Gehäuse 17 fixierten Verbindungsstifts 3 unlösbar mit dem Gehäuse 17 verbunden ist.

### Bezugszeichenliste

- 1: stangenförmige Schloßbestandteile
- 2: Öffnung
- 3: Verbindungsstift
- 4: Verdickung
- 5: Abstandshalter
- 6: Verdickung
- 7: stangenförmige Schloßbestandteile bzw. Vierkant
- 7': stangenförmige Schloßbestandteile
- 8: senkkopfartige Verdickung
- 9: Verdickung
- 9': Verdickung
- 9": Verdickung
- 10: Öffnung
- 10': Öffnung
- 11: Schloßbestandteil
- 12: Kette
- 13: Schloßkörper
- 14: Kettenglied
- 15: Kettenglied
- 16: Einschnürung
- 17: Gehäuse
- 18: Ausnehmung
- 19: Durchgangsbereich

## Patentansprüche

1. Verfahren zur Herstellung einer Verbindung zwischen zumindest zwei aus gehärtetem Material bestehenden Bereichen (1, 7, 11, 14, 17) eines Schlosses, wobei jeder der zu verbindenden Bereiche (1, 7, 11, 14, 17) jeweils eine Öffnung (2, 10, 10', 18, 19) aufweist, in denen ein Verbindungsstift (3) zur Kopplung der beiden Bereiche (1, 7, 11, 14, 17) fixiert wird,
**dadurch gekennzeichnet,**
**dass** der aus Stahl mit einer Zugfestigkeit von mehr als 700 N/mm² bestehende, einen konstanten Durchmesser ohne stirnseitige Verdickungen (8) aufweisende Verbindungsstift (3) in die Öffnungen (2, 10, 10', 18, 19) der bereits gehärteten Bereiche (1, 7, 11, 14, 17) eingeführt und anschließend dort mittels eines zumindest an seinen beiden stirnseitigen Enden erfolgenden gefügeverdichtenden Kaltverformungs-Nietvorgangs fixiert wird.

2. Verfahren nach Anspruch 1,
**dadurch gekennzeichnet,**
**dass** ein Verbindungsstift (3) mit einer Zugfestigkeit von mehr als 800 N/mm² verwendet wird.

3. Verfahren nach einem der vorhergehenden Ansprüche,
**dadurch gekennzeichnet,**
**dass** ein Verbindungsstift (3) aus verschleißfestem Stahl, insbesondere aus Hartmanganstahl, vorzugsweise aus X120Mn12 verwendet wird.

4. Verfahren nach einem der vorhergehenden Ansprüche,
**dadurch gekennzeichnet,**
**dass** während des Kaltverformungs-Nietvorgangs zwischen den beiden zu verbindenden Bereichen (1, 7, 11, 14, 17) ein Abstandshalter (5) angeordnet ist, oder
**dass** während des Kaltverformungs-Nietvorgangs die beiden zu verbindenden Bereiche (1) aneinander anliegen.

## Claims

1. A method for establishing a connection between at least two regions (1, 7, 11, 14, 17) of a lock which consist of hardened material, with each of the regions (1, 17, 11, 14, 17) to be connected having a respective opening (2, 10, 10', 18, 19) in which a connection pin (3) for the coupling of the two regions (1, 7, 11, 14, 17) is fixed,
**characterised in that**
the connection pin (3) consisting of steel having a tensile strength of more than 700 N/mm² and having a constant diameter without thickened portions (8) at the end face is introduced into the openings (2, 10, 10', 18, 19) of the already hardened regions (1, 7, 11, 14, 17) and is subsequently fixed there by means of a cold forming and riveting process taking place at at least its two end face ends which compresses the microstructure.

2. A method in accordance with claim 1, **characterised in that** a connection pin (3) having a tensile strength of more than 800 N/mm² is used.

3. A method in accordance with any one of the preceding claims, **characterised in that** a connection pin (3) is used which is made of wear-resistant steel, in particular of hard manganese steel, preferably of X120Mn12.

4. A method in accordance with any one of the preceding claims, **characterised in that** a spacer (5) is arranged between the two regions (1, 7, 11, 14, 17) to be connected during the cold forming and riveting process; or **in that** the two regions (1) to be connected contact one another during the cold forming and riveting process.

## Revendications

1. Procédé pour établir une liaison entre au moins deux zones (1, 7, 11, 14, 17) d'une serrure, réalisées en matériau trempé, dans lequel chacune des zones qu'il s'agit de relier (1, 7, 11, 14, 17) présente une ouverture (2, 10, 10', 18, 19)respective, dans lesquelles est fixée une tige de liaison (3) pour coupler les deux zones (1, 7, 11, 14, 17),
**caractérisé en ce que**
la tige de liaison (3), réalisée en acier avec une résistance à la traction supérieure à 700 N/mm² et présentant un diamètre constant sans épaississement (8) côté frontal, est introduite dans les ouvertures (2, 10, 10', 18, 19) des zones déjà trempées (1, 7, 11, 14, 17) et est ensuite fixée à cet endroit au moyen d'une opération de rivetage avec déformation à froid assurant un compactage de structure, effectuée au moins au niveau de ses deux extrémités frontales.

2. Procédé selon la revendication 1,
**caractérisé en ce que** l'on utilise une tige de liaison (3) avec une résistance à la traction supérieure à 800 N/mm².

3. Procédé selon l'une des revendications précédentes,
**caractérisé en ce que** l'on utilise une tige de liaison (3) en acier résistant à l'usure, en particulier en acier dur au manganèse, de préférence en X120Mn12.

4. Procédé selon l'une des revendications précédentes,
**caractérisé en ce que**, pendant l'opération de rivetage avec déformation à froid, un écarteur (5) est agencé entre les deux zones qu'il s'agit de relier (1, 7, 11, 14, 17), ou
**en ce que** pendant l'opération de rivetage avec déformation à froid, les deux zones qu'il s'agit de relier (1) sont appliquées l'une contre l'autre.
